# EUROPEAN PATENT SPECIFICATION

(11) **EP 0 476 979 B1**
(45) Date of publication and mention of the grant of the patent: **05.02.1997**
(21) Application number: 91308483.6
(22) Date of filing: 17.09.1991
(51) Int. Cl.: C08L 83/04, C08K 13/02, C08K 9/06, C08K 3/36

(54) **Highly transparent silicone fluid compound**
Hochtransparente flüssige Siliconverbindung
Composé de silicone fluide à haute transparence

(30) Priority: 17.09.1990 JP 246843/90
(43) Date of publication of application: 25.03.1992
(73) Proprietor: Shin-Etsu Chemical Co., Ltd., Chiyoda-ku Tokyo 100 (JP)
(72) Inventor: Takahashi, Takayuki, Kanra-gun, Gunma-ken (JP); Kuwata, Satoshi, Annaka-shi, Gunma-ken (JP)
(74) Representative: Whalley, Kevin

(56) References cited:
- EP-A- 0 305 032
- FR-A- 2 290 934
- US-A- 4 560 711
- US-A- 4 701 272

## Description

The present invention relates to a highly transparent silicone fluid compound, and in particular to a highly transparent silicone fluid compound which has a light transmittance of 90 % or greater when filled into a 10 mm-thick quartz cell and subjected to a visible ray of any wavelength, and is, therefore, useful in optical fibers, optoelectronic products and optical instruments.

JP-A-50 64 354, for example, teaches a transparent silicone fluid compound mainly composed of a methylphenylpolysiloxane and a fumed silica having similar refractive indices, and mixed with various additives such as oxyalkylene and polyoxyalkylene. Also, such silicone compounds further added with HO(CH₃C₆H₅SiO)ₙN or with a dimethylpolysiloxane and a silica whose surface is treated with an organosilicic compound such as [(CH₃)₃Si]₂NH are known.

JP-A-51 86 558 teaches a compound composed of a methylphenylpolysiloxane containing phenyl by 29-34 wt%, and additives such as an untreated fumed silica, an untreated precipitated silica, and a stabilizer. JP-A-2 45 561 teaches a compound composed of a methylphenylpolysiloxane containing phenyl by 5-30 mol %, and additives such as a fumed silica whose specific surface area is no less than 130 m²/g, diphenyldialkoxysilane and diphenyldichlorosilane. JP-A-61 246 292 teaches a compound composed of a methylphenylpolysiloxane containing phenyl by 5-20 mol %, and additives such as a fumed silica whose specific surface area is no less than 130 m²/g, and an alkoxysilane containing either a double bond or an epoxy group.

Most of these known silicone fluid compounds contain methylphenylpolysiloxanes as the base material; these are highly transparent and undergo scarce oil bleed. However, most of these compounds fail to exhibit a light transmittance of 90 % or greater when filled into a 10 mm-thick quartz cell and subjected to a visible ray of certain wavelengths. The silicone fluid compound described in JP-A-61 246 292 undergoes virtually no oil bleed and has an excellent light transmittance (greater than 90 % in the case of 10 mm-thickness) and is, therefore, extensively used in optical fibers, optoelectronic products, optical instruments and scintillation camera, and would be used as much in other applications if its cost were smaller.

Therefore, it is an object of the invention to provide a novel silicone fluid compound which has a high transparency and a relatively low manufacturing cost.

According to the invention, a novel highly transparent silicone fluid compound is formulated which attains this object. This novel compound is based on a long chain alkyl-modified silicone fluid, and characterized by comprising:
(a) 100 weight parts of this modified silicone fluid having a viscosity of 50 - 5,000 cS at 25 °C which is represented by 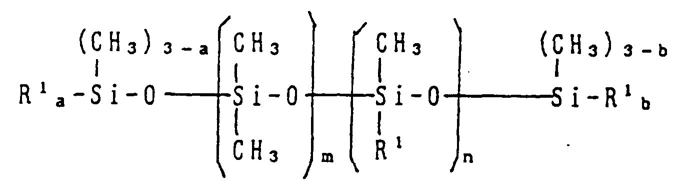 wherein R¹'s are monovalent saturated hydrocarbons having 4-18 carbon atoms and account for 10 - 50 mol % of all the substituents; m and n are integers such that 0≤m<500, 5≤n≤500, and 5≤m+n≤500, and a and b are either 0 or 1 ;
(b) 1 - 30 weight parts of a fumed silica whose specific surface area is no less than 130 m²/g; and
(c) 0.1 - 20 weight parts of an alkoxysilane represented by X_{c}Si(CH₃)_{d}R²ₑ wherein R² is alkoxy; X is a group selected from 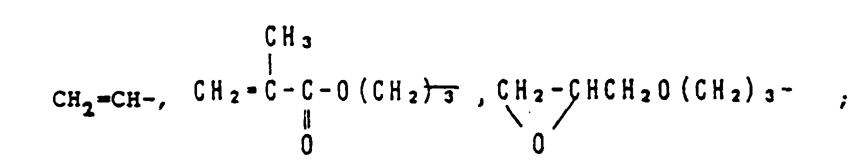 c is either 0 or 1; d is 0, 1 or 2; e is 2 or 3; and c+d+e=4 or a silazane represented by [(CH₃)₃Si]₂NH.

Thus, the inventors, in an attempt to attain the object of the invention, conducted an extensive research and came to discover that if a long chain alkyl-modified silicone fluid is used as the base oil in place of methylphenylpolysiloxane, and if to this base oil is added a fumed silica whose specific surface area is no less than 130 m²/g together with either an alkoxysilane defined above or a hexamethyldisilazane defined above, the resulting silicone fluid compound has a light transmittance of 90 % or greater when filled into a 10 mm-thick quartz cell and subjected to a visible ray of any wavelength. As they furthered their study, the inventors found the better proportions of these elements, and as the result, the novel silicone fluid compound is found to have such an excellent light transmittance that when it is used to fill gaps in an optical communication cable, the light loss at the joints is effectively reduced so that it will be a champion material for a long distance optical communication cable. Also, it has been confirmed that the novel compound is an excellent material as a binder for optical lenses and especially for those used in a scintillation camera.

As described above, the present invention proposes a novel highly transparent silicone fluid compound based on a long chain alkyl-modified silicone fluid comprising the three essentlal components (a), (b) and (c).

The components (a), which is the modified silicone fluid and represented by 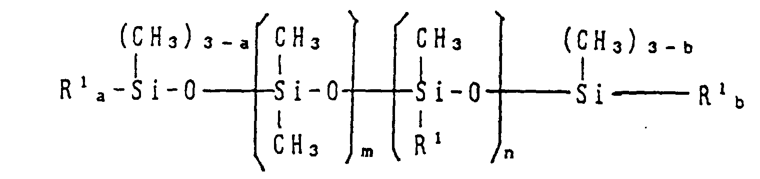 wherein R¹'s are monovalent saturated hydrocarbona having 4 - 18 carbon atoms and account for 10 - 50 mol % of all the substituents; m and n are integers such that 0≤m<500, 5≤n≤500, and 5≤m+n≤500, and a and b are either 0 or 1, must have a viscosity of 50 - 5,000 cS at 25 °C. If the viscosity at the temperature is lower than 50 cS, the resulting silicone fluid compound will be unatable; if higher than 5,000 cS, the manufacturing will be very difficult.

The modified silicone fluid of component (a) is prepared by reacting a methylhydrogenpolysiloxane, which has hydrogen and methyl substituents on the silicon atoms, with an olefinic hydrocarbon having the formula CH₂=CHY where Y is a saturated alkyl group having 2 - 16 carbon atoms, in the presence of an addition reaction catalyst, for example a platinic catalyst. Additional reaction process parameters, suitable starting materials and workup procedures are described, for example, in US 3,885,984. Examples of suitable platinic catalysts are disclosed, for example, in US 2,970,150,US 2,823,218 and US 3,220,972.

The component (b), a fumed silica, may be any of the ones commercially available, but its specific surface area must be 130 m²/g or greater, for if the specific surface area is too small the transparency of the resulting compound will be too poor. The inventors found that a preferred range of the specific surface area of the fumed silica as the component (b) is from 130 to 400 m²/g. Incidentally, if the amount of the fumed silica (b) is less than one weight part per 100 weight parts of component (a), it will be difficult to produce a pasty compound, and if it is greater than 30 weight parts, the resulting compound will be too sticky to enable a smooth handling. A preferable range for the dosage of component (b) is from 5 to 20 weight parts.

The component (c) is either an alkoxysilane or a hexamethylsilazane which is represented by [(CH₃)₃Si]₂NH.

The alkoxysilane (c) is represented by X_{c}Si(CH₃)_{d}R²ₑ (wherein R² is an alkoxy such as methoxy, ethoxy, and 2-methoxyethoxy; X is a group selected from 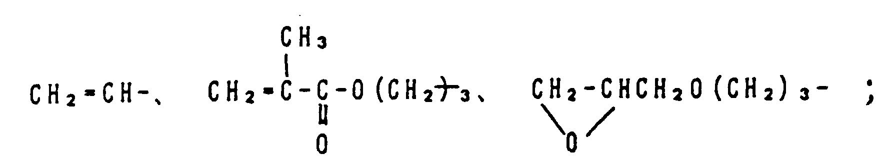 c is either 0 or 1; d is 0, 1 or 2; e is 2 or 3; and c+d+e=4). Therefore, examples of this alkoxysilane include:

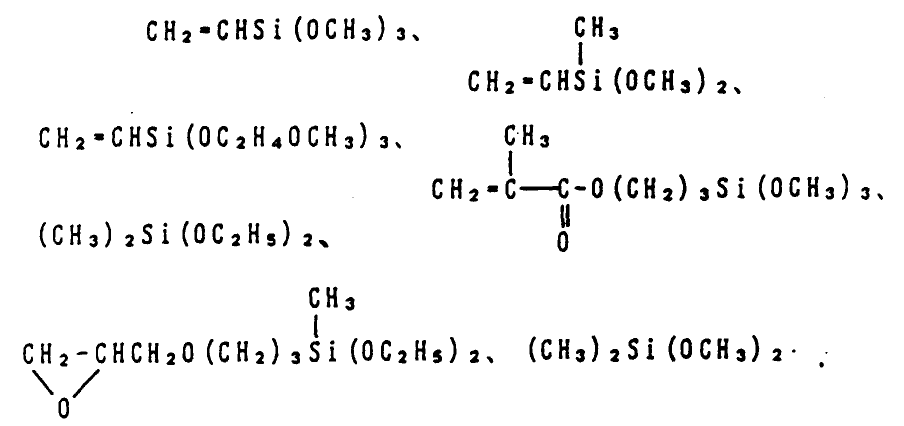

The alkoxysilanes of component (c) are well known in the art. The alkoxysilanes of component (c) may be prepared by reacting an organohalosilane, for example, an organochlorosilane, X_{c}Si(CH₃)_{d}Clₑ, with an alcohol or a metal alkoxide. This reaction is preferably conducted in the presence of a compound which can neutralize the hydrogenhalide (HCl) produced, for example pyridine. Suitable reaction parameters are described, for example, in R. Nagel et al., J.O.C., 16, 1768 (1951).

The alkoxysilane and the hexamethyldisilazane as the alternatives for the component (c) are used to adjust the visible ray transmittance of the silicone fluid compound made from the modified silicone fluid and the fumed silica. If the addition amount of the component (c) is less than 0.1 weight part per 100 weight parts of the silicone fluid (a), the desired object is not brought about, and if the amount exceeds 20 weight parts, no extra effect is obtained. Thus, the dosage of the component (c) must be from 0.1 to 20 weight parts, or preferably from 0.5 to 10 weight parts.

The highly transparent silicone fluid compound of the invention is obtained by simply mixing the components (a), (b) and (c) in the respective predetermined amounts by means of a mixer such as a planetary mixer. A more favorable result is attained if the components are mixed under a reduced pressure and at a raised temperature, and, thereafter, kneaded with a three-roll mill followed by deaeration. It is also recommended that the alkoxysilane or hexamethyldisilazane as the component (c) be mixed with the fumed silica (b) and heated to a temperature of from 50 to 200 °C beforehand. So long as it does not deduct from the achievement of the object of the invention, it is all right to add to the novel silicone fluid compound an agent to decrease flowability such as polyoxyethylene, polyoxypropylene or a copolymer of these for the purpose of adjusting the viscosity.

### EXAMPLES

Next, examples of the present invention and comparative examples will be described, but the invention shall not be limited by any of the details of the description.
Hereinafter, the term "weight part(s)" will be merely "part(s)" for simplicity; the values of the viscosity are all those taken at 25 °C; the values of visible ray transmittance are those taken with respect to rays of a wavelength of from 400 to 700 nm; the values of the penetration are measured at 25 °C in accordance with JIS K2220.

### Example 1; Comparative Example 1

A hundred weight parts of a long chain alkyl-modified silicone fluid which contains straight-chain alkyl of 14 carbons in an amount of 37.5 mol % and has a viscosity of 400 cS, and is represented by 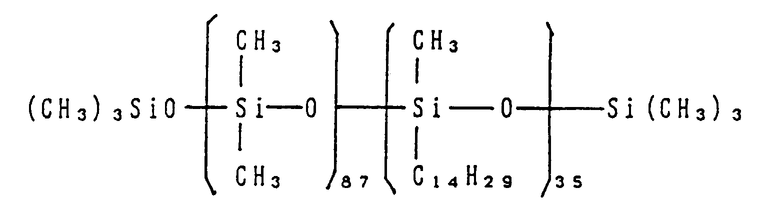 was mixed with 11 parts of a fumed silica, *Aerosil 200*, [manufactured by Nippon Aerosil Co., Ltd.], which had a specific surface area of 200 m²/g, and 3.3 parts of dimethyldimethoxysilane; the mixture was mixed well in a planetary mixer and kneaded with a three-roll mill. After these, deaeration was conducted under a reduced pressure. A transparent silicone fluid compound was obtained, which was found to have a penetration of 320, and a visible ray transmittance of 99.9 - 98 % when filled into a 10 mm-thick quartz cell.

For the sake of comparison, a silicone fluid compound was prepared in exactly the same manner as in the above example except that the silicone fluid used was a dimetylsilicone fluid having a viscosity of 500 cS. The resulting silicone fluid compound was excessively soft having a penetration of only 430, and its visible ray transmittance was so low as 34 - 2 %.

### Example 2; Comparative Example 2

A hundred weight parts of a long chain alkyl-modified silicone fluid which contains-straight-chain alkyl of 10 carbons in an amount of 25 mol % and has a viscosity of 2,000 cS, and is represented by 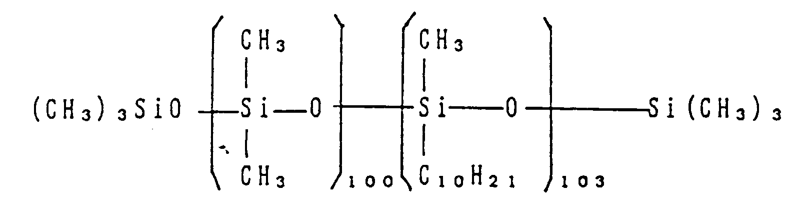 was mixed with 20 parts of a fumed silica, *Aerosil 130*, [manufactured by Nippon Aerosil Co., Ltd.], which had a specific surface area of 130 m²/g, and 2.4 parts of hexamethyldisilazane; the mixture was mixed well in a planetary mixer and kneaded with a three-roll mill. After these, deaeration was conducted under a reduced pressure. A transparent silicone fluid compound was obtained, which was found to have a penetration of 320, and a visible ray transmittance of 99.9 - 98 % when filled into a 10 mm-thick quartz cell.

For comparison, a silicone fluid compound was prepared in exactly the same manner as in Example 2 except that the silicone fluid used was a dimetylsilicone fluid having a viscosity of 2,000 cS. The resulting silicone fluid compound had a penetration of 364, and its visible ray transmittance was 84 - 24 %.

### Example 3; Comparative Example 3

A mixture consisting of a hundred parts of a fumed silica, *Aerosil 380*, [manufactured by Nippon Aerosil Co., Ltd.], which had a specific surface area of 380 m²/g, and 30 parts of vinyltrimethoxysilane was heat-treated at 150 °C for four hours.

Ten parts of this mixture was added to a hundred weight parts of a long chain alkyl-modified silicone fluid which contains straight-chain alkyl of 8 carbons in an amount of 25 mol % and has a viscosity of 100 cS, and is represented by 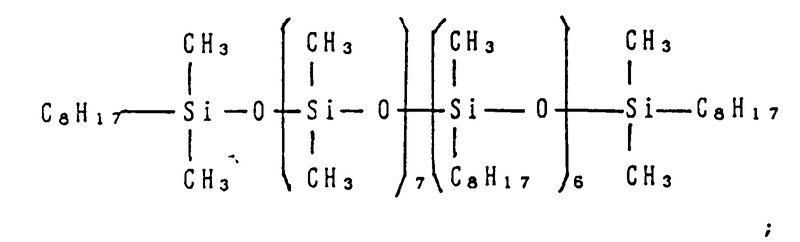 the mixture was mixed well in a planetary mixer and kneaded with a three-roll mill. After these, deaeration was conducted under a reduced pressure. A transparent silicone fluid compound was obtained, which was found to have a penetration of 310, and a visible ray transmittance of 97 - 90 % when filled into a 10 mm-thick quartz cell.

For comparison, a silicone fluid compound was prepared in exactly the same manner as in Example 3 except that the silicone fluid used was a dimetylsilicone fluid having a viscosity of 100 cS. The resulting silicone fluid compound had a penetration of 306, and its visible ray transmittance was so low as 2.5 - 0 %.

### Example 4; Comparative Example 4

A hundred weight parts of a long chain alkyl-modified silicone fluid which contains straight-chain alkyl of 10 carbons in an amount of 15 mol % and has a viscosity of 160 cS, and is represented by 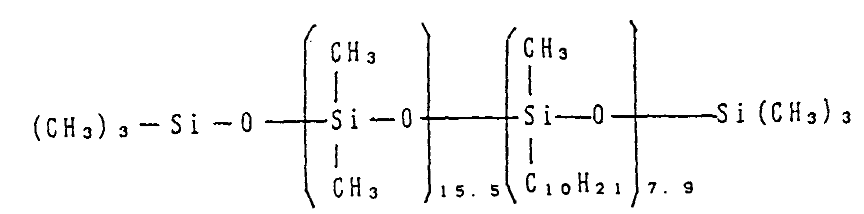 was mixed with 12 parts of a fumed silica, *Aerosil 130*, which had a specific surface area of 130 m²/g, and 10.8 parts of γ-methacryloxypropyltrimethoxysilane represented by: 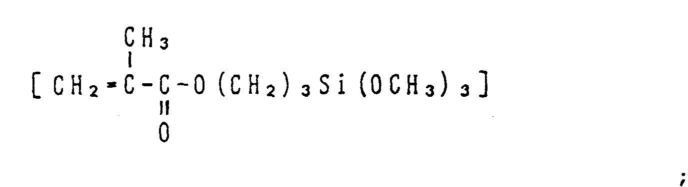 the mixture was mixed well in a planetary mixer and kneaded with a three-roll mill. After these, deaeration was conducted under a reduced pressure. A transparent silicone fluid compound was obtained, which was found to have a penetration of 300, and a visible ray transmittance of 99.0 - 97 % when filled into a 10 mm-thick quartz cell.

For comparison, a silicone fluid compound was prepared in exactly the same manner as in Example 4 except that the γ-methacryloxypropyltrimethoxysilane was not added. The resulting silicone fluid compound was a sticky one having a penetration of only 202, and its visible ray transmittance was as low as 66 - 35 %.

### Example 5; Comparative Example 5

A hundred weight parts of a long chain alkyl-modified silicone fluid which contains straight-chain alkyl of 8 carbons in an amount of 44 mol % and has a viscosity of 100 cS, and is represented by 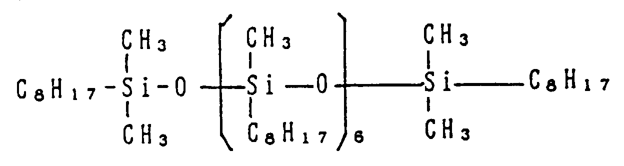 was mixed with 15 parts of a fumed silica, *Aerosil 200*, which had a specific surface area of 200 m²/g, and 2 parts of γ-glycidoxypropyldiethoxysilane represented by 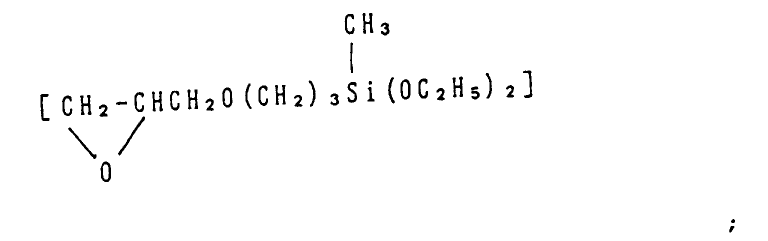 the mixture was mixed well in a planetary mixer and kneaded with a three-roll mill. After these, deaeration was conducted under a reduced pressure. A transparent silicone fluid compound was obtained, which was found to have a penetration of 250, and a visible ray transmittance of 99.0 - 91 % when filled into a 10 mm-thick quartz cell.

For comparison, a silicone fluid compound was prepared in exactly the same manner as in Example 5 except that the γ-glycidoxypropyldiethoxysilane was not added. The resulting silicone fluid compound was so sticky as to have a penetration of only 150, and its visible ray transmittance was only 54 - 29 %.

## Claims

1. A highly transparent silicone fluid compound formulated by mixing:
(a) 100 weight parts of a long chain alkyl-modified silicone fluid having a viscosity of 50 - 5,000 cS at 25 °C represented by 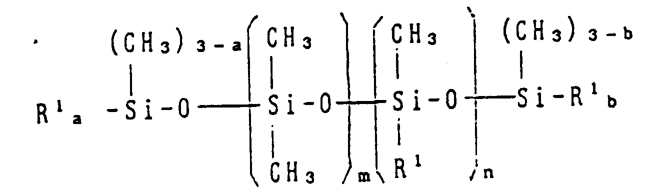 wherein R¹'s are monovalent saturated hydrocarbons having 4 - 18 carbon atoms and account for 10 - 50 mol % of all the substituents; m and n are integers such that 0≤m<500, 5≤n≤500, and 5≤m+n≤500, and a and b are either 0 or 1 ;
(b) 1 - 30 weight parts of a fumed silica whose specific surface area is no less than 130 m²/g; and
(c) 0.1 - 20 weight parts of an alkoxysilane represented by X_{c}Si(CH₃)_{d}R²ₑ wherein R² is alkoxy; X is a group selected from 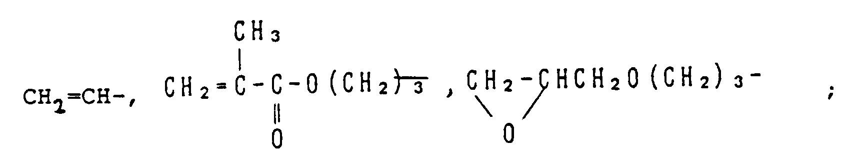 c is either 0 or 1; d is 0, 1 or 2; e is 2 or 3; and c+d+e=4 , or a hexamethyldisilazane represented by [(CH₃)₃Si]₂NH.

2. A compound as claimed in claim 1, characterized in that said fumed silica has a specific surface area of from 130 to 400 m²/g.

3. A compound as claimed in claim 1 or 2, characterized in that the amount of said fumed silica is 5 - 20 weight parts.

4. A compound as claimed in any of claims 1 to 3, characterized in that the amount of said alkoxysilane or hexamethyldisilazane is 0.5 - 10 weight parts.

5. A compound as claimed in any of claims 1 to 4, characterized in that said elements (b) and (c) are mixed first and heated to a temperature of 50 - 200 °C.

## Patentansprüche

1. Hochtransparente Siliconfluid-Masse, zubereitet durch Mischen von:
(a) 100 Gewichtsteilen eines mit langkettigem Alkyl modifizierten Siliconfluids einer Viskosität von 50 bis 5.000 cSt bei 25°C, dargestellt durch die Formel 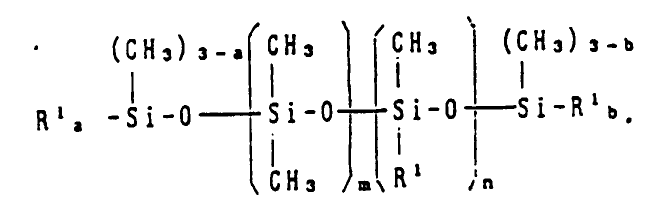 worin R¹ einwertige, gesättigte Kohlenwasserstoffe mit 4 bis 18 Kohlenstoffatomen sind und 10 bis 50 Molprozent der gesamten Substituenten ausmachen; m und n sind ganze Zahlen derart, daß 0 ≤ m < 500; 5 ≤ n ≤ 500 und 5 ≤ m+n ≤ 500 gelten und a und b entweder Null oder 1 sind;
(b) 1 bis 30 Gewichtsteilen eines Silica-Feinpulvers mit einer spezifischen Oberfläche von nicht weniger als 130 m²/g; sowie
(c) 0,1 bis 20 Gewichtsteilen eines Alkoxysilans, dargestellt durch X_{c}Si(CH₃)_{d}R²ₑ, worin R² Alkoxy ist; X ist eine Gruppe, ausgewählt aus: 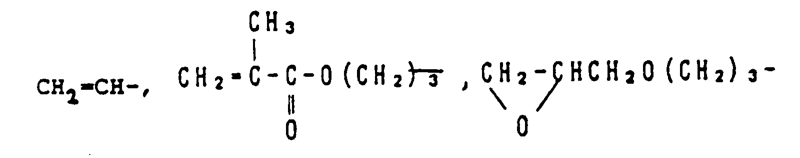 c ist entweder Null oder 1; d ist Null, 1 oder 2; e ist 2 oder 3; und c+d+e=4, oder eines Hexamethyldisilazans, dargestellt durch [(CH₃)₃Si]₂NH.

2. Masse nach Anspruch 1, dadurch gekennzeichnete daß das Silica-Feinpulver eine spezifische Oberfläche von 130 bis 400 m²/g aufweist.

3. Masse nach Anspruch 1 oder 2. dadurch gekennzeichnet, daß die Menge des Silica-Feinpulvers 5 bis 20 Gewichtsteile beträgt.

4. Masse nach einem der vorhergehenden Ansprüche 1 bis 3, dadurch gekennzeichnet, daß die Menge des Alkoxysilans oder Hexamethyldisilazans 0.5 bis 10 Gewichtsteile beträgt.

5. Masse nach einem der Ansprüche 1 bis 4, dadurch gekennzeichnet, daß die Grundbestandteile (b) und (c) zuerst gemischt und auf eine Temperatur von 50 bis 200°C erhitzt werden.

## Revendications

1. Composé de type silicone fluide de transparence élevée formulé en mélangeant:
(a) 100 parties en poids d'un fluide de type silicone modifié par un alkyle à longue chaîne ayant une viscosité de 50-5000 cS à 25°C qui est représenté par 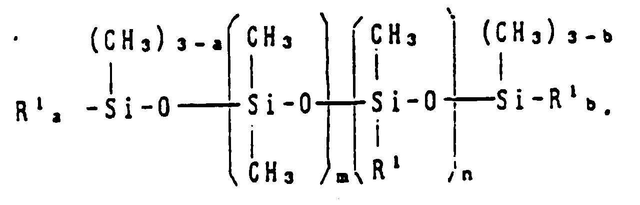 dans laquelle les R¹ sont des hydrocarbures saturés monovalents comportant 4-18 atomes de carbone et représentent 10-50 % en moles de tous les substituants; m et n sont des nombres entiers tels que 0 ≤ m < 500, 5 ≤ n ≤ 500 et 5 ≤ m+n ≤ 500, et a et b valent soit 0 soit 1;
(b) 1-30 parties en poids d'une silice fumée dont la surface spécifique n'est pas inférieure à 130 m²/g; et
(c) 0.1-20 parties en poids d'un alkoxy-silane représenté par X_{c}Si(CH₃)_{d}R²ₑ dans laquelle R² est alkoxy; X est un groupe choisi parmi 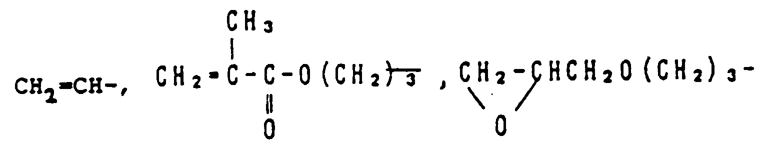 c vaut soit 0 soit 1; d vaut 0, 1 ou 2; e vaut 2 ou 3; et c+d+e = 4, ou l'hexaméthyl-disilazane représenté par [(CH₃)₃Si]₂NH.

2. Composé tel que revendiqué dans la revendication 1, caractérisé en ce que ladite silice fumée a une surface spécifique de 130 à 400 m²/g.

3. Composé tel que revendiqué dans la revendication 1 ou 2, caractérisé en ce que la quantité de ladite silice fumée est de 5-20 parties en poids.

4. Composé tel que revendiqué dans l'une quelconque des revendications 1 à 3, caractérisé en ce que la quantité dudit alkoxy-silane ou hexaméthyldisilazane est de 0.5-10 parties en poids.

5. Composé tel que revendiqué dans l'une quelconque des revendications 1 à 4, caractérisé en ce que lesdits éléments (b) et (c) sont mélangés d'abord et chauffés à une température de 50-200°C.
